# EUROPEAN PATENT SPECIFICATION

(11) **EP 1 533 201 B1**
(45) Date of publication and mention of the grant of the patent: **06.12.2006**
(21) Application number: 03764207.1
(22) Date of filing: 16.07.2003
(51) Int. Cl.: B60R 25/02, B62D 1/16, B62D 1/18, B60R 22/02

(54) **STEERING COLUMN DEVICE**
LENKSÄULENVORRICHTUNG
DISPOSITIF DE COLONNE DE DIRECTION

(30) Priority: 17.07.2002 JP 2002208535
(43) Date of publication of application: 25.05.2005
(73) Proprietor: NSK LTD., Shinagawa-ku, Tokyo 141-8560 (JP)
(72) Inventor: SATO, Kenji, c/o NSK LTD., Maebashi-shi, Gunma 371-0853 (JP); SAWADA, Naoki, c/o NSK LTD., Maebashi-shi, Gunma 371-0853 (JP)
(74) Representative: Baldwin, Mark
(86) International application number: PCT/JP2003/009014
(87) International publication number: WO 2004/007253

(56) References cited:
- EP-A2- 1 016 570
- GB-A- 2 298 837
- JP-A- 8 295 202
- JP-A- 2002 067 881
- JP-A- 2002 316 652
- JP-U- 56 124 549
- JP-Y2- 7 032 323
- US-A- 3 686 906
- US-A- 5 117 664

## Description

### FIELD OF THE INVENTION

The present invention relates to a steering column that constitutes a steering apparatus for a vehicle or the like, and particularly to a technology for realizing improvement in strength and rigidity of a steering lock mount portion while focusing on a reduction of manufacturing costs.

### BACKGROUND ART

A steering lock is provided in a steering apparatus or the like for a vehicle in order to prevent theft when the vehicle is parked. The steering lock is an arrangement in which a lock key biased by a spring is brought into engagement with a steering shaft by an operation such as rotating the ignition key to a lock position or pulling the ignition key out of the steering column or the like, to thereby disable steering. Generally, the steering column is made of a steel pipe having a circular cross section, and when a steering lock is mounted, it is embraced by the steering lock having a semicircular cross section and a lock bracket.

If a car thief tries to rotate the steering wheel under the locked state, the rotational force is transmitted to the steering lock via the steering shaft and the lock key. In view of this, the steering lock is securely attached to the steering column through engagement of a projection formed on a mount surface with an engagement hole formed on the steering column.

Conventional steering columns suffer from the following problem.

Since the steering column is generally made of a relatively thin steel pipe, in case that the above-described rotational force is large, there is a risk that the edge portion of the engagement hole may be broken and the steering lock can rotate around the steering column. Under such a state, the disengagement of the tip end of the lock key from the engagement hole is easy to occur. If the disengagement occurs, the steering shaft can freely rotate relative to the steering column, and the function of the steering lock is fully disabled.

Japanese Patent Application Laid-Open No. 08-295202 (which will be referred to as "the prior art" hereinafter) discloses an arrangement in which in addition to a first through hole for a lock key in which a first projection formed on a mount surface of a steering lock is to be fitted, a second through hole spaced apart from the first through hole is formed on a part of the steering column and a second projection is formed on the mount surface of the steering column so that the first projection is fitted into the first through hole without play and the second projection is fitted into the second through hole without play. In this prior art, since the rotational torque of the steering shaft is distributed to the fitting surfaces of multiple through hole-projection pairs, the engagement strength of the steering column and the steering lock is enhanced as compared to ordinary arrangements and the function of the steering lock is hard to be disabled even when a large torque is exerted on the steering shaft.

However, in the prior art apparatus, a high precision is required for the dimension of the spacing between the two projections or the two through holes. Thus, not only the manufacturing cost is increased by additional perforating process etc., but also great efforts are required for maintenance of a perforating tool (a punch) or the like. In connection with this, the attachment strength of the steering column and the steering lock depends on the size and number of the projections and through holes. However, if the size or the number of the through holes is increased, the rigidity of the steering column is deteriorated, and deterioration in steering feeling is inevitable.

On the other hand, in the case of a tilt type steering column, a relatively large distance bracket is attached to its connection portion with a vehicle side bracket (or a tilt bracket). Those parts are attached using fillet welding or spot welding, and this, together with an increase in the number of parts, invites an increase in the manufacturing cost. In addition, if there is a displacement in the angular phase upon welding the distance bracket to the steering column, the steering lock and a through hole for the steering lock on a cowl (or a column cover) is displaced when the cowl is mounted on the distance bracket. As a result, it is necessary to mount the cowl at a position displaced from the prescribed position, and there is a risk that the cowl may be deformed or the appearance may be deteriorated.

A steering column apparatus according to the preamble of claim 1 is known from US-A-3 686 906.

### DISCLOSURE OF THE INVENTION

The present invention has been made in view of the above-described situation. An object of the present invention is to provide a steering column apparatus in which improvement in strength and rigidity of a steering lock mount portion is realized while focusing on a reduction of manufacturing costs.

In order to solve the above-described problems, according to the present invention, there is provided a steering column apparatus comprising:
a steering column provided with a steering lock mount portion on its outer circumference and supporting a steering shaft rotatably;
a steering lock having a lock key for latching said steering shaft and a contact portion that is in contact with a part of said steering lock mount portion of said steering column; and
a lock bracket having a contact portion that is in contact with another part of said steering lock mount portion, said contact portion of said steering lock and said contact portion of said lock bracket embracing said steering lock mount portion of said steering column,
**characterized in that**
the steering lock mount portion of said steering column abuts at least one of said steering lock and said lock bracket with an abutting surface having a non-circular cross section.

According to the present invention, since the steering lock mount portion engages with the steering lock or the lock bracket with, for example, a polygonal abutting surface, the rigid engagement with respect to the rotation direction can be realized without depending on a projection and a through hole.

In the steering column apparatus according to the present invention, it is preferable that said steering lock mount portion may have a circular cross sectional shape relative to said steering lock. With this feature, a conventional steering lock used to be mounted on a steering column having a circular cross section can be used, and therefore it is not necessary to produce a new metal mold.

In the steering column apparatus according to the present invention, it is preferable that said steering lock mount portion be plastically formed by a bulge process. With this feature, the steering lock mount portion can be easily formed even if it has such a shape that bulges from the steering column.

In the steering column apparatus according to the present invention, it is preferable that said steering column include a plastically formed portion other than said steering lock mount portion, and said plastically formed portion be plastically formed by a bulge process simultaneously with the steering lock mount portion. With this feature, it is not necessary to produce a distance bracket as a separate part or to carry out a welding process upon providing a distance portion for allowing tilt on the steering column.

### BRIEF DESCRIPTION OF THE DRAWINGS

Fig. 1 is a side view showing a steering column apparatus according to a first embodiment.
Fig. 2 is a view as seen from the direction indicated by arrow A in Fig. 1.
Fig. 3 is a cross sectional view taken along line B-B in Fig. 1.
Fig. 4 is a cross sectional view taken along line C-C in Fig. 1.
Fig. 5 is a cross sectional view taken along line D-D in Fig. 1.
Fig. 6 is a cross sectional view taken along line D-D in Fig. 1.
Fig. 7 is an enlarged view showing an elongated hole.
Fig. 8 is a side view showing a steering column apparatus according to a second embodiment.
Fig. 9 is an enlarged cross sectional view taken along line E-E in Fig. 8.
Fig. 10 is a side view showing a steering column apparatus according to a third embodiment.
Fig. 11 is an enlarged cross sectional view taken along line F-F in Fig. 10.

### EMBODIMENTS OF THE INVENTION

In the following, embodiments of a steering column apparatus according to the present invention will be described.

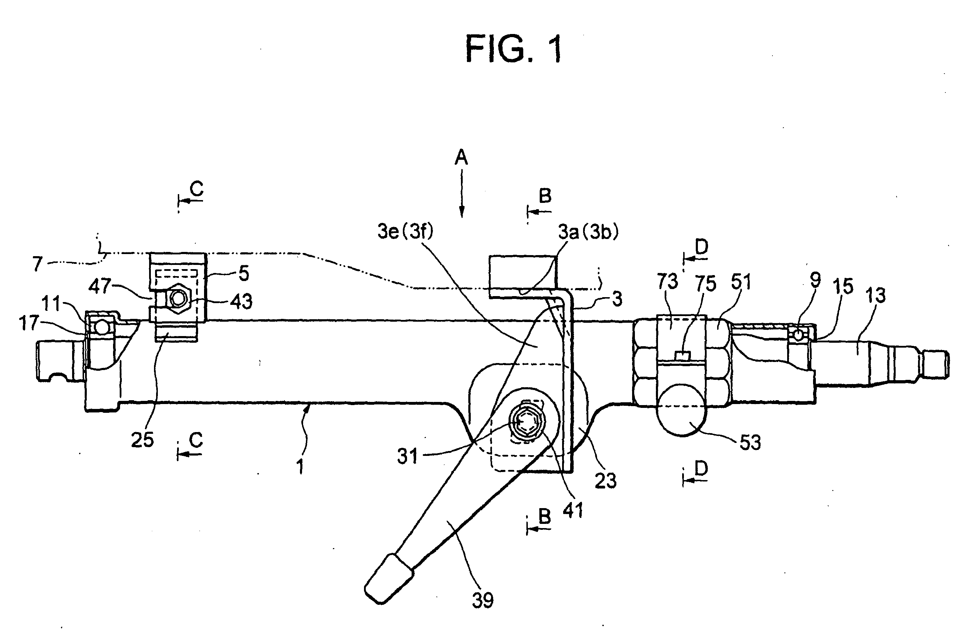

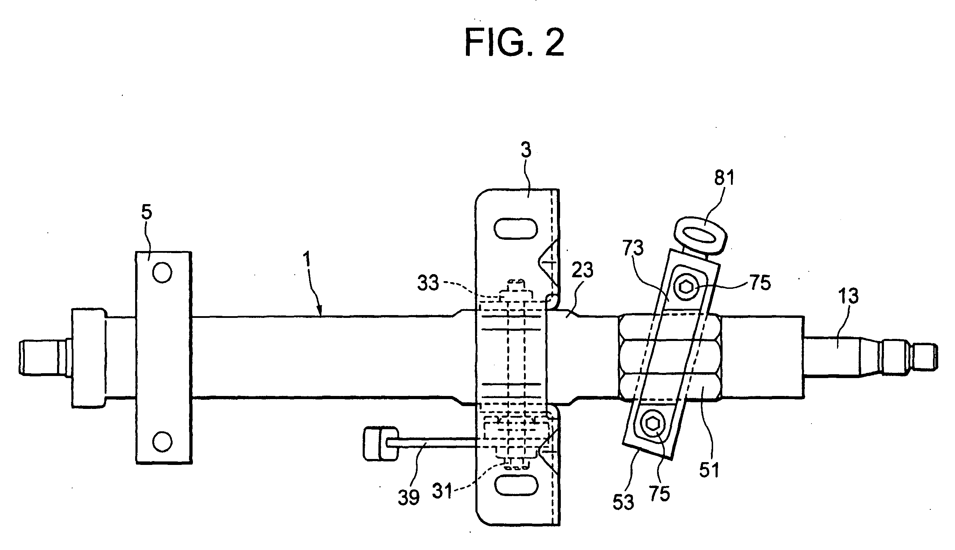

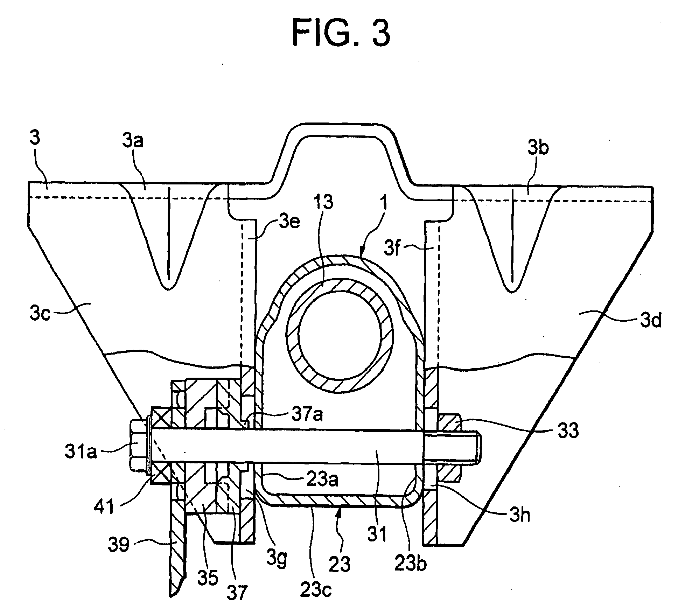

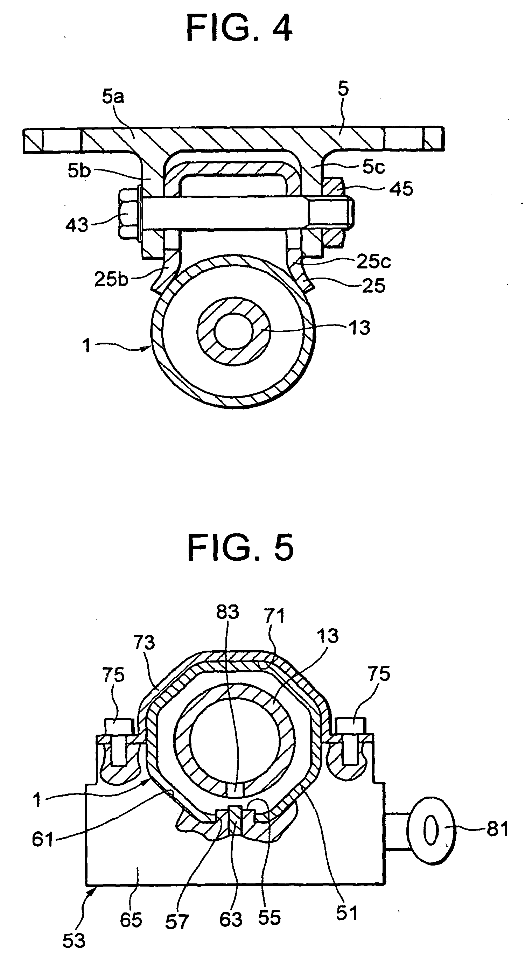

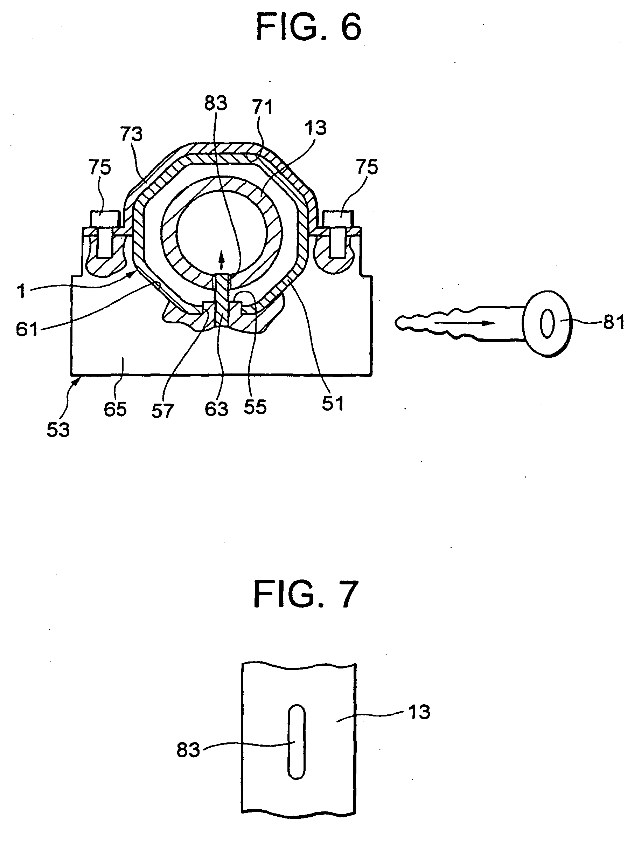

Fig. 1 is a side view showing a steering column apparatus according to the first embodiment. Fig. 2 is a view as seen from the direction indicated by arrow A in Fig. 1. Fig. 3 is a cross sectional view taken along line B-B in Fig. 1. Fig. 4 is a cross sectional view taken along line C-C in Fig. 1. Figs. 5 and 6 are cross sectional views taken along line D-D in Fig. 1. The steering column 1 is mounted on a strength member 7 on the vehicle body by means of an upper bracket 3 in the form of a press-formed steel plate and a pivot bracket 5 in the form of an aluminum alloy die-cast part. The steering column 1 rotatably supports an upper steering shaft (which will be simply referred to as a steering shaft hereinafter) 13 via bearings 9 and 11. A steering wheel (not shown) is attached to the upper end (the right end in Figs. 1 and 2) of the steering shaft 13. The lower end (the left end in Figs. 1 and 2) of the steering shaft 13 is joined with a lower steering shaft via a universal joint. In Fig. 1, on the right side and left side of the upper bearing 9 and the bearing 11 respectively, there is provided snap rings.

The steering column 1 is formed by a hydraulic bulge process using a steel pipe, in which a distance portion 23 is bulged at the position corresponding to the upper bracket 3 for mounting to the vehicle body, and a lower bracket 25 in the form of a press-formed steel plate is welded to the portion corresponding to the pivot bracket 5 to be secured to the vehicle body.

The upper bracket 3 has its width in the longitudinal direction of the steering axis and extends symmetrically in the direction perpendicular to the direction in which the steering axis extends, namely extends in the left and right directions in Fig. 3. The upper bracket 3 integrally includes a pair of vehicle body mount portions 3a and 3b to be secured to the strength member on the vehicle body by means of a fixing member(s) such as a bolt(s) or the like.

In the upper bracket 3, there is integrally formed rear wall portions 3c and 3d that are bent substantially orthogonally at the rear end of the vehicle mount portions 3a and 3b and extending downwardly and a pair of side plate portions 3e and 3f that are bent substantially orthogonally at the inner side of the rear wall portions 3c and 3d respectively and extending frontward (i.e. toward the left side in Fig. 1) and in the vertical direction.

The distance portion 23 integrally bulged downwardly from the steering column 1 includes flat side wall portions 23a and 23b held between the side plate portions 3e and 3f of the upper bracket 3 with a pressure and a bottom portion 23c that connects the side wall portions 23a and 23b at their lower ends.

Elongated holes 3g and 3h for allowing tilt adjustment, which will be described later, are provided on the side plate portions 3e and 3f of the upper bracket 3. Circular holes corresponding to those elongated holes 3g and 3h are formed on the side wall portions 23a and 23b of the distance portion 23. The distance portions 23 is held between the side plate portions 3e and 3f of the upper bracket 3 with a certain constrictive force by means of a bolt 31 passing through the elongated holes 3g and 3h for tilt adjustment on the side plate portions 3e and 3f and the through holes on the side wall portions 23a and 23b and a nut 33 threaded and tightened on the bolt 31. Between the head portion 31a of the bolt 31 and the bracket side plate portion 3e, there is provided well-known cam elements 35 and 37, a lever 39 for tilt adjustment and a thrust bearing 41. A projecting portion 37a of the cam element 37 that extends toward the right in Fig. 3 is engaging with the elongated hole 3g on the bracket side plate portion 3e so that the cam element 37 cannot rotate. The other cam element 35 is in an integral relationship with the tilt adjustment lever 39, and when the tilt adjustment lever 39 is rotated manually, the cam element 35 rotates together with it. As a result, the relative position of the cam elements 35 and 37 changes in the axial direction of the bolt 31 to vary the spacing between the side plate portions 3e and 3f, so that the side wall portions 23a and 23b of the distance portion 23 is constricted or the constriction is released.

Although in this embodiment, the aforementioned distance portion 23 is formed on the lower portion of the steering column 1 and extending downwardly, the distance portion may be formed oppositely on the upper portion of the steering column 1 so that it is supported by the bracket side wall portions at a position above the steering shaft 13.

The pivot bracket 5 serving as a vehicle side bracket is fixed to the vehicle side strength member 7 in the vehicle front side of the upper bracket 3 through its horizontally extending vehicle mount portion 5a, by means of bolts or the like. A pair of parallel vertical plate portions 5b and 5c extend downwardly from the vehicle mount portion 5a of the pivot bracket 5.

The column side lower bracket 25 fixed to the lower portion of the steering column 1 integrally includes flat plate portions 25b and 25c that are extending vertically in association with the vertical plate portions 5b and 5c of the pivot bracket 5 so as to be pressed against them. Circular holes aligned with respect to the horizontal direction are formed on the respective flat plate portions 25b and 25c of the column side lower bracket. A bolt 43 passes through the circular holes and is secured by a nut 45.

Although in this embodiment, the column side lower bracket 25 is a separate member from the steering column 1 and fixed to the steering column 1 by welding, it may be formed by bulging the steering column using a hydraulic bulge process in a manner similar to the above-described distance portion 23. U-shaped notches 47 that open to the front side are formed on the pivot bracket 5. The pivot bolt 43 is fitted into the rear end sides of the notches 47. The steering column 1 is adapted to be swingable with the pivot bolt 43 being the pivot, so that the driver can adjust the vertical position of the steering wheel within a predetermined range by operating a tilt lever 39.

When an impact load is applied to the steering shaft 13 upon secondary collision, the steering column 1 moves frontward, and therefore the rear wall portions 3c and 3d of the upper bracket 3 swing frontward about their upper end bend portion through the side plate portions 3e and 3f. At the same time, the column side bracket 25 is detached from the pivot bracket 5 together with the steering column 1 through the notch portions 47.

In the steering column 1 according to this embodiment, a steering lock mount portion 51 having an equilateral octagonal cross section is formed in the rear side of the upper bracket 3 with respect to the vehicle (i.e. in the right side in Figs. 1 and 2). A steering lock 53 is attached to the steering lock mount portion 51. The steering lock mount portion 51 is formed by a hydraulic bulge process simultaneously with the aforementioned distance portion 23 etc. As shown in Fig. 5, the steering lock mount portion 51 has a through hole 57 on its bottom wall into which a projection 55 formed on the steering lock 53 is fitted.

The steering lock 53 is an aluminum alloy die-cast part. As shown in Fig. 5, the steering lock 53 has a holding surface 61 formed into a shape that conforms to the lower portion of the steering lock mount portion 51 of the steering column 1 and a holder portion 65 for accommodating a lock key 63 and a key cylinder etc. that is not shown. A lock bracket 73 having a holding surface 71 formed into a shape that conforms to the upper portion of the steering lock mount portion 51 is secured to the upper surface of the holder portion 65 by a pair of shear bolts 75, whereby the steering lock mount portion 51 is securely embraced by the steering lock 53 and the lock bracket 73. The shear bolt 75 is a bolt that is adapted in such a way that in order to prevent removal of the steering lock 53 for theft, when it is tightened by a certain tightening torque, the head portion (normally hexagonal in shape) of it is broken and separated so that it cannot be loosened by a wrench or the like. Although the steering lock 53 is mounted on the steering column 1 obliquely as shown in Fig. 2. However, in the drawings other than Fig. 2, the steering lock 53 is illustrated as if it is perpendicular to the steering column for the sake of simplicity of illustration.

An ignition key 81 can be inserted into/pulled out from the key cylinder accommodated in the holder portion 65. Upon operation of the ignition key 81, the lock key 63 projects/retreats through the projection 55 in the vertical direction in Fig. 5. Specifically, in the case of this embodiment, when the ignition key 81 is inserted into the key cylinder and brought to the ON-position, the lock key 63 retreats into the projection 55 as shown in Fig. 5. When the ignition key is brought to the OFF-position and pulled off, the lock key 63 is pushed by a spring that is not shown in the drawings so as to be raised beyond the projection 55 as shown in Fig. 6. On the steering shaft 13, an elongated hole 83 is formed at the position corresponding to the lock key 63. A plan view of the elongated hole 83 is shown in Fig. 7. The lock key 63 fits into this elongated hole 83 when the lock key 63 is raised. Since the mechanism for moving the lock key 63 interlocked with the ignition key 81 is a conventionally known mechanism (see, for example, Japanese Patent Application Laid-Open No. 56-142728 and Japanese Patent Application Laid-Open No. 57-164841) and the mechanism does not relate to the present invention directly, the detailed description thereof will be omitted.

In the steering column apparatus according to this embodiment, when the driver takes out the ignition key 81 from the key cylinder upon parking the automobile, the lock key 63 is raised beyond the projection 55 of the steering lock 53. In addition, when the steering wheel is rotated by a certain amount and the phase of the elongated hole 83 of the steering shaft 13 and the lock key 63 coincide, the lock key 63 biased by the spring enters the elongated hole 83 and the steering shaft 13 is locked with respect to the rotational direction.

If a car thief tries to rotate the steering wheel (i.e. the steering shaft 13) under this state, a rotational force acts on the steering lock 53 via the lock key 63 and the projection 55. However, in this embodiment, since the steering lock 53 and the lock bracket 73 are embraced by the steering lock 53 and the lock bracket 73 having the holding surfaces 61 and 71 that conform to the octagonal cross section of the steering lock mount portion 51 of the steering column 1, it will not rotate relative to the steering column 1. Consequently, disengagement of the tip end of the lock key and the engagement hole, which was a problem in the conventional apparatus, will not occur and there is no risk of loss of the function of the steering lock 53.

Meanwhile, in this embodiment, not only the steering lock mount portion 51 having an octagonal cross section but also the distance portion 23 is formed by a hydraulic bulge process. In addition, high accuracy in dimensions or many perforating process required in prior arts are not necessary. Thanks to these features, reduction of manufacturing cost with reduction of the number of parts and the number of manufacturing processes can be realized. In addition, since the distance portion 23 and the steering lock mount portion 51 are formed simultaneously, relative phase difference between the steering lock 53 and the peripheral parts (such as components of the tilt mechanism etc.) with respect to the rotational direction is eliminated, so that the positional relationship of the parts can be kept within the vicinity of the designed values. Thus, problems in the prior art apparatus, namely positional displacement of the steering lock 53 and the through hole for the steering lock on the cowl side or deformation of the cowl caused by that displacement are eliminated.

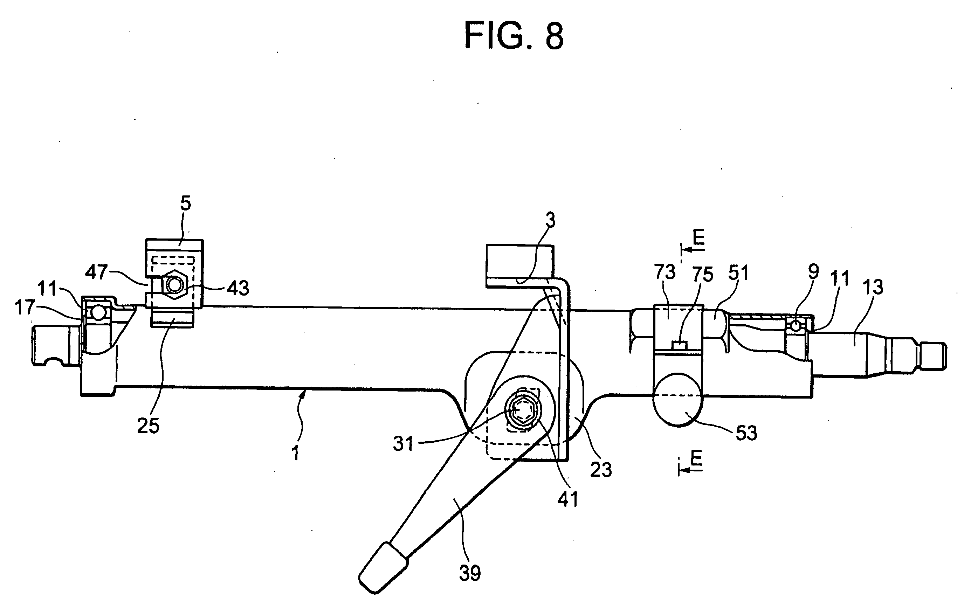

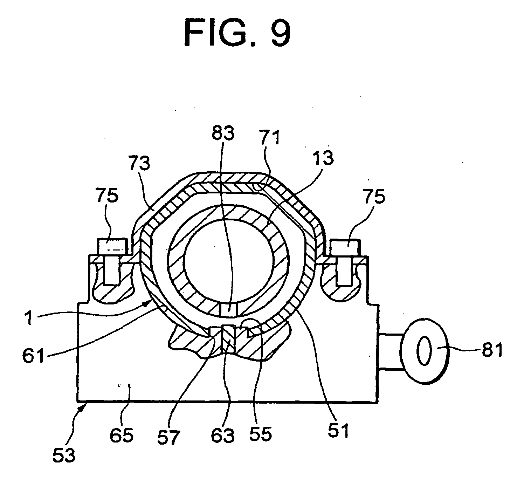

Fig. 8 is a side view showing a steering column apparatus according to a second embodiment. Fig. 9 is a cross sectional view taken along line E-E in Fig. 8. As will be seen from these drawings, the overall structure of the second embodiment is similar to that of the above-described embodiment, but the cross sectional shape of the steering lock mount portion and the shape of the holding surface of the steering lock are different. Specifically, in the second embodiment, the upper half of the steering lock mount portion 51 has a cross sectional shape of a half-cut equilateral octagon, but the lower half has a semicircular cross section. The holding surface 61 on the upper portion of the steering lock 53 also has a semicircular cross section correspondingly and the lock bracket 73 that constitutes a pair with the holding surface 61 to embrace the steering column has a half-cut equilateral octagonal cross section corresponding to the cross sectional shape of the upper part of the lock mount portion 51. With the above-described structure, a conventional steering lock 53 can be diverted to the second embodiment. Consequently, it is not necessary to newly produce an expensive aluminum die casting mold and the cost for the equipments can be greatly reduced as compared to the first embodiment. Incidentally, the operation of this embodiment is the same as that of the first embodiment.

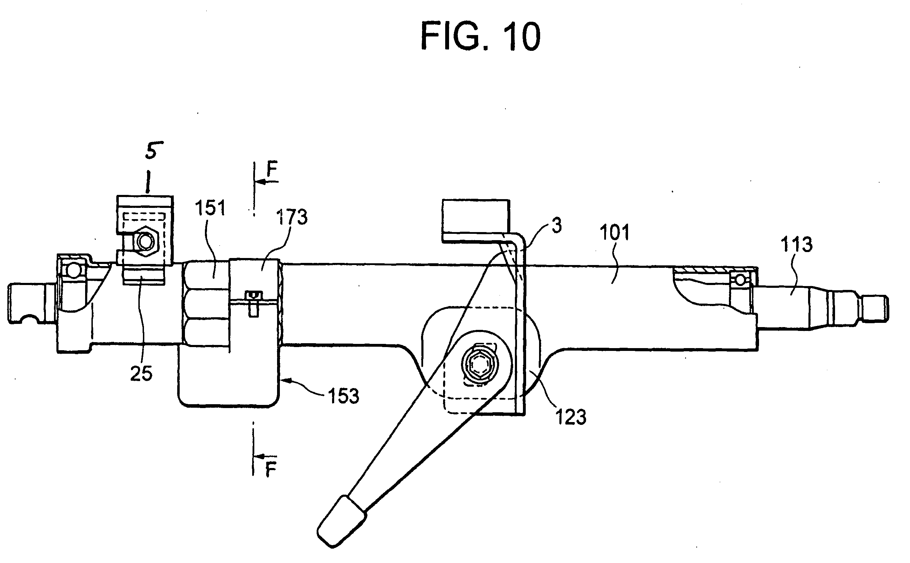

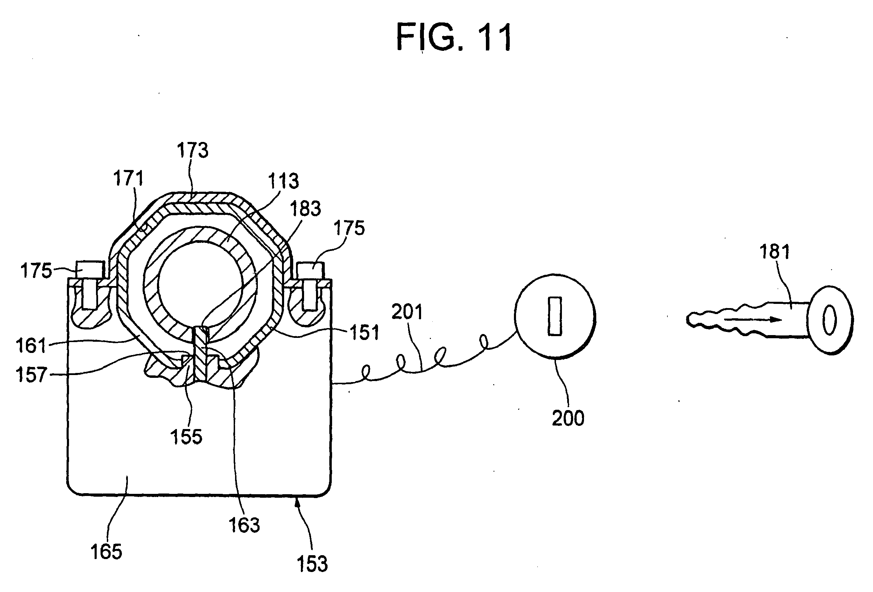

Fig. 10 is a side view showing a steering column apparatus according to a third embodiment. Fig. 11 is an enlarged cross sectional view taken along line F-F in Fig. 10. As shown in these drawings, the overall structure of the third embodiment is similar to the embodiments that have been described in the foregoing. However, the axial positions of the steering lock and the steering lock mount portion are different from the above-described embodiments. In addition, while a purely mechanical lock mechanism is used in the steering lock 153 of the above-described embodiments, in the third embodiment an electromagnetic lock mechanism is used. In this embodiment, since the electromagnetic lock mechanism equipped in the steering lock 153 itself has been already known, for example, as disclosed in Japanese Patent Application Laid-Open No. 10-138871 etc. and it does not have direct relevance to the present invention, the detailed description of that mechanism will be omitted. A key insertion cylinder 200 is formed as a separate part from the lock 153 and it is provided at an appropriate position on the dash panel and connected by means of a wire 201.

In the steering column 101 in the third embodiment, a steering lock mount portion 151 having an equilateral octagonal cross section is provided at an appropriate position between the distance portion 123 to be attached to an upper bracket 3 for mounting to the vehicle body and a column side lower bracket 25 to be attached to a pivot bracket 5 for mounting to the vehicle body. A steering lock 153 is mounted on the steering lock mount portion 151. The steering lock mount portion 151 is formed by a hydraulic bulge - process simultaneously with the distance portion 123 etc. As shown in Fig. 11, a through hole 157 in which a projection 155 formed on the steering lock 153 is to be fitted is formed on the lower surface of the steering lock mount portion 151.

The steering lock 153 is an aluminum alloy die-cast part. As shown in Fig. 11, the steering lock 153 has a holding surface 161 formed into a shape that conforms to the lower portion of the steering lock mount portion 151 of the steering column 101 and a holder portion 165 for accommodating a lock key 163 and an electromagnetic lock mechanism (not shown), which itself is well known. A lock bracket 173 having a holding surface 171 formed into a shape that conforms to the upper portion of the steering lock mount portion 151 is secured to the upper surface of the holder portion 165 by a pair of shear bolts 175, whereby the steering lock mount portion 151 is securely embraced by the steering lock 153 and the lock bracket 173. The shear bolt 175 is a bolt that is adapted in such a way that in order to prevent removal of the steering lock 153 for theft, when it is tightened by a certain tightening torque, the head portion (normally hexagonal in shape) of it is broken and separated so that it cannot be loosened by a wrench or the like. The electromagnetic lock mechanism provided in the steering lock 153 in this embodiment has been already known and it does not have direct relevance to the present invention. So the detailed description of that mechanism will be omitted. A key insertion cylinder 200 is formed as a separate part from the lock 153 and it is provided at an appropriate position on the fascia panel and connected by means of a wire 201.

An ignition key 181 can be inserted into/pulled out from the key cylinder 200. Upon operation of the ignition key 181, the lock key 163 projects/retreats through the projection 155 in the vertical direction in Fig. 11. On the steering shaft 13, an elongated hole 183 is formed at the position corresponding to the lock key 163. The lock key 163 fits into this elongated hole 183 when the lock key 163 is raised.

In the steering column apparatus according to this embodiment, in response to driver's taking-out or insertion of the ignition key 181 from/into the key cylinder 200 upon parking the automobile, the electromagnetic lock mechanism operates to raise or retract the projection 155 of the steering lock 153 to functions as a steering lock. Besides this operation, the third embodiment is the same as the first and second embodiments.

The structure and operation of the third embodiment other than those described above are the same as the first embodiment, and the description thereof will be omitted.

Now the description of the specific embodiments has been finished, but modes of the present invention are not limited to the above-described embodiments. For example, the shape of the steering lock mount portion may be of a quadrangular cross section or hexagonal cross section instead of an equilateral octagonal cross section. Alternatively, it may have a spline or multiple arcuate ribs. Furthermore, as the method for forming the steering lock mount portion and the distance portion, various processes such as an explosive bulge process, a rubber bulge forming process, a press forming process may be adopted instead of the hydraulic bulge process. In addition, the specific structure of the steering column apparatus or the material or shape of each component can be modified without departing from the scope of the present invention as defined in the claims.

As per the above, in the steering column apparatus according to the present invention, rigid engagement with respect to the rotation direction can be realized without depending on a projection and a through hole.

## Claims

1. A steering column apparatus comprising:
a steering column (1) provided with a steering lock mount portion (51) on its outer circumference and supporting a steering shaft (13) rotatably;
a steering lock (53) having a lock key (63) for latching said steering shaft (13) and a contact portion (61) that is in contact with a part of said steering lock mount portion (51) of said steering column (1); and
a lock bracket (73) having a contact portion (71) that is in contact with another part of said steering lock mount portion (51), said contact portion of said steering lock (61), and said contact portion (71) of said lock bracket (73) embracing said steering lock mount portion (51) of said steering column (1)
**characterized in that** the steering lock mount portion (51) of said steering column (1) abuts at least one of said steering lock (53) and said lock bracket (73) with an abutting surface having a non-circular cross section.

2. A steering column apparatus according to claim 1, wherein said steering lock mount portion (51) abuts said steering lock (53) with a circular cross section.

3. A steering column apparatus according to claim 1 or 2 wherein said steering lock mount portion (51) is plastically formed by a bulge process.

4. A steering column apparatus according to claim 3, wherein said steering column (1) includes an plastically formed portion (23) other than said steering lock mount portion (51), and said plastically formed portion is plastically formed by a bulge process simultaneously with the steering lock mount portion.

## Patentansprüche

1. Lenksäulenvorrichtung, die Folgendes umfasst:
eine Lenksäule (1), die an ihrem Außenumfang mit einem Lenkschlossmontageabschnitt (51) versehen ist und eine Lenkspindel (13) drehbar stützt;
ein Lenkschloss (53) mit einem Arretierungsschlüssel (63) zum Verriegeln der Lenkspindel (13) und einem Kontaktabschnitt (61), der mit einem Teil des Lenkschlossmontageabschnitts (51) der Lenksäule (1) in Kontakt steht; und
einem Schlossbügel (73) mit einem Kontaktabschnitt (71), der mit einem anderen Teil des Lenkschlossmontageabschnitts (51) in Kontakt steht, wobei der Kontaktabschnitt (61) des Lenkschlosses und der Kontaktabschnitt (71) des Schlossbügels (73) den Lenkschlossmontageabschnitt (51) der Lenksäule (1) umschließen;
**dadurch gekennzeichnet, dass** der Lenkschlossmontageabschnitt (51) der Lenksäule (1) mit einer Anlagefläche von nicht-kreisförmigem Querschnitt an dem Lenkschloss (53) und/oder an dem Schlossbügel (73) anliegt.

2. Lenksäulenvorrichtung nach Anspruch 1, wobei der Lenkschlossmontageabschnitt (51) mit einem kreisförmigen Querschnitt an dem Lenkschloss (53) anliegt.

3. Lenksäulenvorrichtung nach Anspruch 1 oder 2, wobei der Lenkschlossmontageabschnitt (51) plastisch mittels eines Auswölbungsverfahrens ausgebildet wird.

4. Lenksäulenvorrichtung nach Anspruch 3, wobei die Lenksäule (1) noch einen anderen plastisch geformten Abschnitt (23) als den Lenkschlossmontageabschnitt (51) enthält und der plastisch geformte Abschnitt plastisch mittels eines Auswölbungsverfahrens gleichzeitig mit dem Lenkschlossmontageabschnitt ausgebildet wird.

## Revendications

1. Appareil de colonne de direction comprenant :
une colonne (1) de direction munie d'une partie (51) de support de verrou de direction sur sa circonférence extérieure et portant un arbre (13) de direction avec possibilité de rotation ;
un verrou (53) de direction comportant une clé (63) de verrouillage destinée à verrouiller ledit arbre (13) de direction, et une partie (61) de contact qui est en contact avec une partie de ladite partie (51) de support de verrou de direction de ladite colonne (1) de direction ; et
une ferrure (73) de blocage comportant une partie (71) de contact qui est en contact avec une autre partie de ladite partie (51) de support de verrou de direction, ladite partie (61) de contact dudit verrou de direction et ladite partie (71) de contact de ladite ferrure (73) de blocage encerclant ladite partie (51) de support de verrou de direction de ladite colonne (1) de direction,
**caractérisé en ce que**
la partie (51) de support de verrou de direction de ladite colonne (1) de direction vient en butée contre au moins soit ledit verrou (53) de direction, soit ladite ferrure (73) de blocage avec une section d'aboutement ayant une section transversale non circulaire.

2. Appareil de colonne de direction selon la revendication 1, dans lequel ladite partie (51) de support de verrou de direction vient en butée contre ledit verrou (53) de direction avec une section transversale circulaire.

3. Appareil de colonne de direction selon la revendication 1 ou 2, dans lequel ladite partie (51) de support de verrou de direction est constituée de plastique par un processus de gonflement.

4. Appareil de colonne de direction selon la revendication 3, dans lequel ladite colonne (1) de direction comprend une partie (23) constituée de plastique autre que ladite partie (51) de support de verrou de direction et ladite partie constituée de plastique est constituée de plastique par un processus de gonflement, simultanément avec la partie de support de verrou.
